(19) **Europäisches Patentamt European Patent Office Office européen des brevets**

(11) **EP 4 472 301 A1**

(12) **EUROPEAN PATENT APPLICATION**
published in accordance with Art. 153(4) EPC

(43) Date of publication:
04.12.2024 Bulletin 2024/49

(21) Application number: 23743522.7

(22) Date of filing: 20.01.2023

(51) International Patent Classification (IPC):
H04W 56/00 $^{(2009.01)}$     H04W 72/23 $^{(2023.01)}$
H04B 7/024 $^{(2017.01)}$

(52) Cooperative Patent Classification (CPC):
H04B 7/024; H04W 56/00; H04W 72/23

(86) International application number:
PCT/KR2023/000997

(87) International publication number:
WO 2023/140679 (27.07.2023 Gazette 2023/30)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 24.01.2022 KR 20220009679

(71) Applicant: **LG Electronics Inc.**
**Yeongdeungpo-gu**
**Seoul 07336 (KR)**

(72) Inventors:
• **GO, Seongwon**
**Seoul 06772 (KR)**

• **KIM, Kyuseok**
**Seoul 06772 (KR)**
• **KIM, Hyungtae**
**Seoul 06772 (KR)**
• **KANG, Jiwon**
**Seoul 06772 (KR)**
• **PARK, Haewook**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR PERFORMING UPLINK TRANSMISSION AND RECEPTION IN WIRELESS COMMUNICATION SYSTEM**

(57)     Disclosed are a method and device for performing uplink transmission and reception in a wireless communication system. A method for a terminal to perform uplink transmission and reception in a wireless communication system according to an embodiment disclosed herein may comprise the steps of: receiving configuration information related to a serving cell from a base station, the configuration information including information about a plurality of TAGs associated with the serving cell; receiving DCI including first instruction information and second instruction information from the base station; and performing at least one of first uplink transmission or second uplink transmission on the basis of at least one of the first instruction information or the second instruction information, wherein, on the basis of the first uplink transmission being performed using the first instruction information, a first transmission timing of the first uplink transmission is based on a first TA value related to a first TAG corresponding to the first instruction information among the plurality of TAGs, and, on the basis of the second uplink transmission being performed using the second instruction information, a second transmission timing of the second uplink transmission is based on a second TA value related to a second TAG corresponding to the second instruction information among the plurality of TAGs.

EP 4 472 301 A1

## FIG.10

RECEIVING CONFIGURATION INFORMATION RELATED TO THE SERVING CELL FROM THE BASE STATION ~S1010

RECEIVING DCI INCLUDING FIRST INDICATION INFORMATION AND SECOND INDICATION INFORMATION FROM THE BASE STATION ~S1020

PERFORMING AT LEAST ONE OF FIRST UPLINK TRANSMISSION OR SECOND UPLINK TRANSMISSION BASED ON AT LEAST ONE OF THE FIRST INDICATION INFORMATION OR THE SECOND INDICATION INFORMATION ~S1030

**Description**

[Technical Field]

The present disclosure relates to a wireless communication system, and more specifically to a method and device for performing uplink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception in a wireless communication system.

In addition, an additional technical problem of the present disclosure is to provide a method and device for transmitting and receiving absolute/relative timing advance (TA) commands set for each of a plurality of timing advance groups (TAGs) set for a serving cell.

Additionally, an additional technical problem of the present disclosure is to provide a method and device for managing/applying TA values for each of the plurality of TAGs set for the serving cell.

The technical objects to be achieved by the present disclosure are not limited to the above-described technical objects, and other technical objects which are not described herein will be clearly understood by those skilled in the pertinent art from the following description.

[Technical Solution]

According to one embodiment of the present disclosure, a method for of performing uplink transmission by a user equipment (UE) in a wireless communication system may include receiving configuration information related to a serving cell from a base station, wherein the configuration information including information about a plurality of timing advance groups (TAGs) associated with the serving cell; receiving, from the base station, downlink control information (DCI) including first indication information and second indication information; and performing at least one of first uplink transmission or second uplink transmission based on at least one of the first indication information or the second indication information, and based on the first uplink transmission being performed using the first indication information, a first transmission timing of the first uplink transmission may be based on a first TA value associated with a first TAG corresponding to the first indication information among the plurality of TAGs, and based on the second uplink transmission being performed using the second indication information, a second transmission timing of the second uplink transmission may be based on a second TA value associated with a second TAG corresponding to the second indication information among the plurality of TAGs.

According to one embodiment of the present disclosure, a method of performing uplink reception by a base station in a wireless communication system may include transmitting configuration information related to a serving cell to a user equipment (UE), wherein the configuration information including information about a plurality of timing advance groups (TAGs) associated with the serving cell; transmitting, to the UE, downlink control information (DCI) including first indication information and second indication information; and performing at least one of first uplink reception or second uplink reception based on at least one of the first indication information or the second indication information, and based on the first uplink reception being performed using the first indication information, a first transmission timing of the first uplink transmission may be based on a first TA value associated with a first TAG corresponding to the first indication information among the plurality of TAGs, and based on the second uplink reception being performed using the second indication information, a second transmission timing of the second uplink transmission may be based on a second TA value associated with a second TAG corresponding to the second indication information among the plurality of TAGs.

[Technical Effects]

According to an embodiment of the present disclosure, a method and device for performing uplink transmission and reception in a wireless communication system may be provided.

In addition, according to various embodiments of the present disclosure, a method and device for transmitting and receiving absolute/relative TA commands configured for each of a plurality of TAGs configured for a serving cell may be provided.

In addition, according to various embodiments of the present disclosure, a method and device for managing/applying TA values for each of a plurality of TAGs set for a serving cell may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram illustrating an uplink-downlink timing relationship in a wireless communication system to which the present disclosure may be applied.

FIG. 8 illustrates MAC CE for random access response in a wireless communication system to which the present disclosure may be applied.

FIG. 9 illustrates a timing advance command MAC CE in a wireless communication system to which the present disclosure may be applied.

FIG. 10 is a diagram for describing an uplink transmission operation of a UE in a wireless communication system to which the present disclosure may be applied.

FIG. 11 is a diagram for describing an uplink reception operation of a base station in a wireless communication system to which the present disclosure may be applied.

FIG. 12 illustrates a MAC CE with an enhanced timing advance command to which the present disclosure may be applied.

FIG. 13 is a diagram for describing an uplink transmission and reception operation based on a TASG ID corresponding to CORESETPoolIndex to which the present disclosure may be applied.

FIG. 14 is a diagram for describing a method of defining a TA command value to which the present disclosure may be applied based on the SCS of BWP.

FIG. 15 is a diagram for describing the signaling procedure of the network side and the terminal according to an embodiment of the present disclosure.

FIG. 16 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

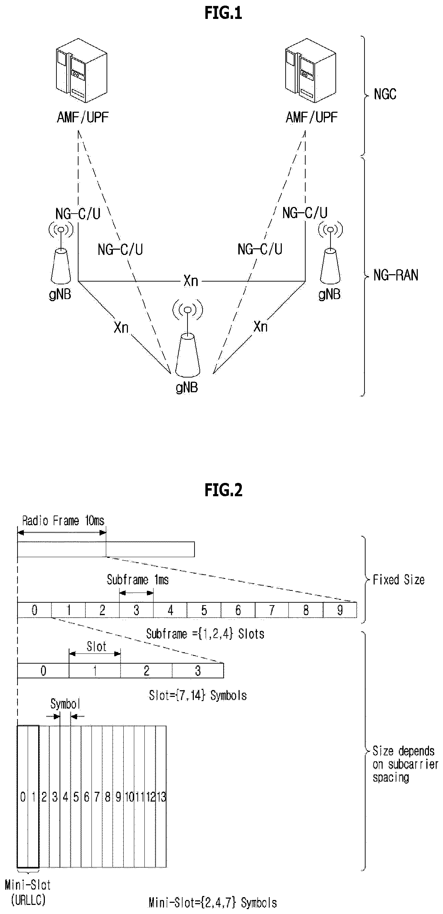

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame

($N_{slot}^{frame,\mu}$} and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

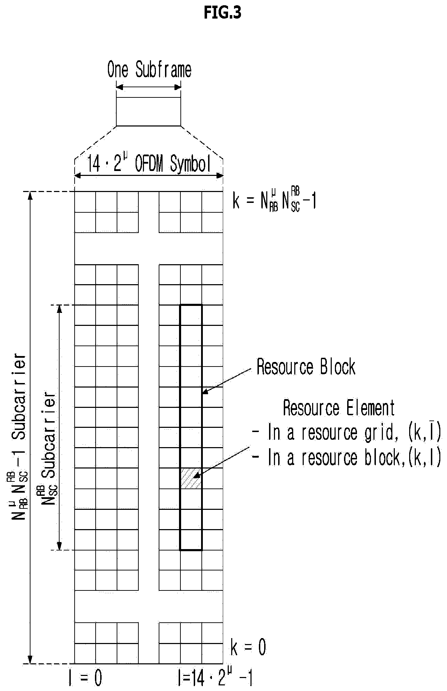

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,...,$N_{RB}^{\mu}N_{sc}^{RB}$-1 is an index in a frequency domain and l'=0,...,$2^{\mu}N_{symb}^{(\mu)}$-1 refers to a position of a symbol in a subframe. When referring to a resource element in a slot, an index pair (k,l) is used. Here, l=0,...,$N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number). Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

**【Equation 1】**

$$n^{\mu}_{CRB} = \left\lfloor \frac{k}{N^{RB}_{sc}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

**【Equation 2】**

$$n^{\mu}_{CRB} = n^{\mu}_{PRB} + N^{start,\mu}_{BWP,i}$$

$N_{BWP,i}^{start,\mu}$ is a common resource block that a BWP starts relatively to common resource block 0.

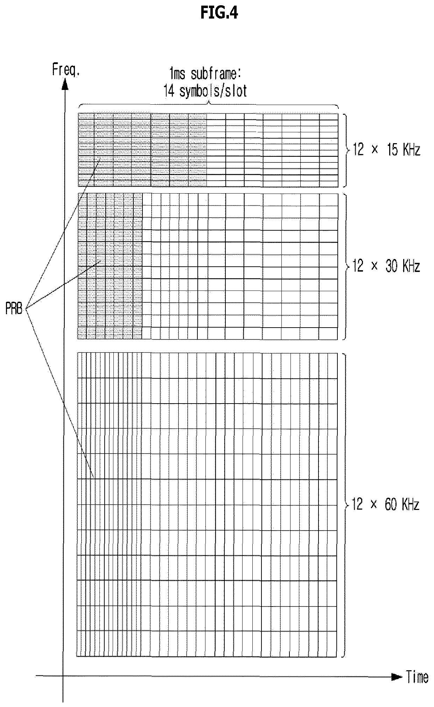

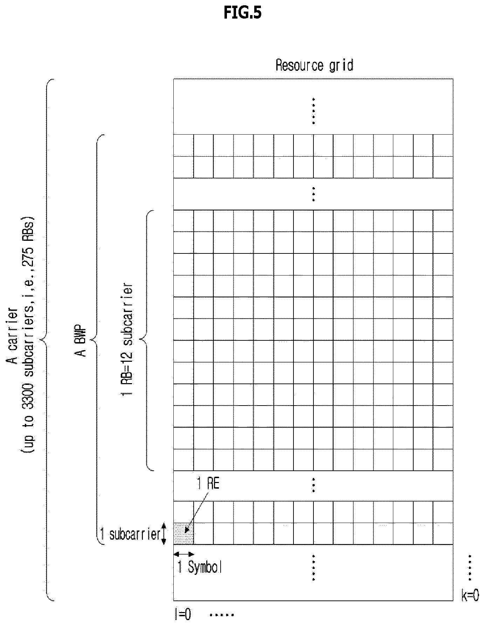

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot.

In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

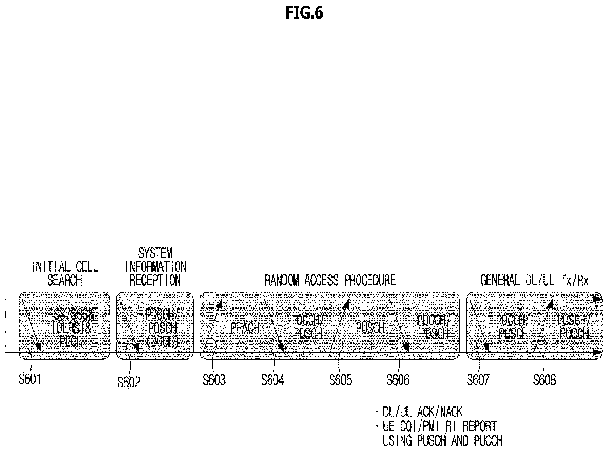

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Timing advance (TA: timing advanced related operations

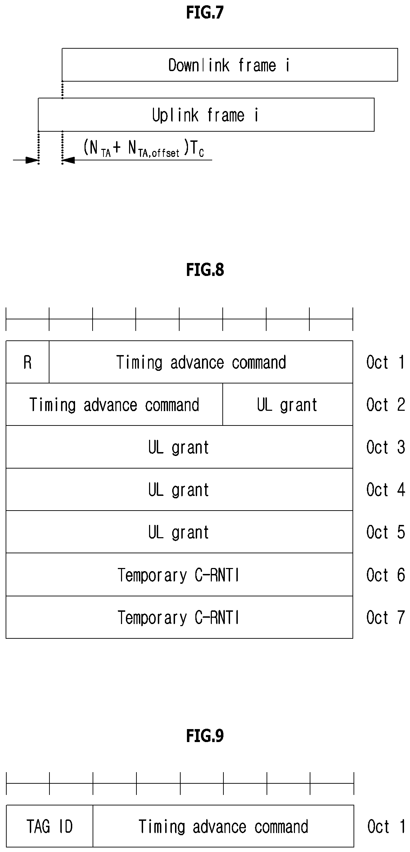

FIG. 7 is a diagram illustrating an uplink-downlink timing relationship in a wireless communication system to which the present disclosure may be applied.

The uplink frame number i for transmission from the UE starts $T_{TA}=(N_{TA}+N_{TA,offset})Tc$ before the start of the corresponding downlink frame (i.e., downlink frame i) in the UE. That is, the uplink frame starts $T_{TA}$ before the corresponding downlink frame. Here, $N_{TA,offset}$ can be given except for msgA transmission on PUSCH (in this case, $N_{TA}=0$).

Hereinafter, the $N_{TA}$ configuration method will be described.

$N_{TA}$ may be configured through i) a random access response (RAR), or ii) a timing advance command MAC control element (CE: control element).

Case 1: configuring method through RAR

In the case of a random access response or an absolute timing advance command MAC CE (TA) for a timing advance group, the timing advance command indicates $N_{TA}$ values with index values of $T_A=0, 2, ..., 3846$.

Here, the amount of time alignment for a TAG with a SCS of $2^\mu \cdot 15$ kHz is $N_{TA}=T_{TA} \cdot 16 \cdot 64/2^\mu$. $N_{TA}$ is relative to the SCS of the first uplink transmission from the UE after receipt of the random access response or absolute timing advance command MAC CE.

FIG. 8 illustrates MAC CE for random access response in a wireless communication system to which the present disclosure may be applied.

MAC CE (hereinafter MAC RAR) for random access response has a fixed size as shown in FIG. 8 and includes the following fields.

- R: Reserved bit, set to 0;
- Timing Advance Command: The Timing Advance Command field indicates the index value $T_A$ used to control the amount of timing adjustment that the MAC entity should apply. The size of the Timing Advance Command field is 12 bits.
- UL Grant: The Uplink Grant field indicates resources to be used for uplink. The size of the UL Grant field is 27 bits.
- Temporary C-RNTI : The Temporary C-RNTI field is a temporary identifier used by the MAC entity during random access. The size of the Temporary C-RNTI field is 16 bits.

Case 2: Timing advance command (MAC-CE) configuration method

Timing advance command (TA) for TAG is index values of TA =0,1,2,...,63 and indicates adjustment of the current NTA value (i.e., NTA_old) to a new NTA value (i.e. NTA_new). Here, in the case of SCS of $2^\mu \cdot 15$ kHz, NTA_new=NTA_old+(TA-31)·16·64/2$^\mu$.

FIG. 9 illustrates a timing advance command MAC CE in a wireless communication system to which the present disclosure may be applied.

Timing Advance Command MAC CE is identified by a MAC subheader having a logical channel identity (LCID). Timing Advance Command MAC CE has a fixed size and consists of 1 octet as follows.

- TAG ID (TAG Identity): This field indicates the TAH identifier of the addressed TAG. The TAG including SpCell has TAG identifier 0. The length of this field is 2 bits.
- Timing Advance Command: This field indicates the index value TA used to control the amount of timing adjustment that the MAC entity should apply. The length of the Timing Advance Command field is 6 bits.

In the present disclosure, although it mainly illustrates and describes the four-step random access procedure (i.e.

the RACH procedure), since the 2-step random access procedure is not excluded, the present disclosure may be equally applied to the 2-step random access procedure.

Hereinafter, the configuration method of $N_{TA,offset}$ will be described.

Case 1: Method of configuring a specific value for each serving cell

An information element (IE) for serving cell common configuration (e.g., ServingCellConfigCommon) is used to configure cell-specific parameters of the serving cell of the UE. When the UE accesses a cell from an idle state, the IE includes parameters that may generally be obtained from SSB, master information block (MIB), or SIBs. With this IE, the network provides information in dedicated signaling when configuring secondary cells (SCells) or additional cell groups (SCGs) to the UE. Additionally, the network provides the UE with special cells (SpCell) (master cell group (MCG) and SCG) when re-establishing synchronization.

Table 6 illustrates ServingCellConfigCommon IE.

【Table 6】

```
ServingCellConfigCommon ::=          SEQUENCE {
physCellId                           PhysCellId
OPTIONAL,     -- Cond HOAndServCellAdd,
downlinkConfigCommon                 DownlinkConfigCommon
OPTIONAL,     -- Cond HOAndServCellAdd
uplinkConfigCommon                   UplinkConfigCommon
OPTIONAL,     -- Need M
supplementaryUplinkConfig            UplinkConfigCommon
OPTIONAL,     -- Need S
n-TimingAdvanceOffset                ENUMERATED { n0, n25600, n39936 }
OPTIONAL,     -- Need S
ssb-PositionsInBurst                 CHOICE {
          shortBitmap                      BIT STRING (SIZE (4)),
          mediumBitmap                     BIT STRING (SIZE (8)),
          longBitmap                       BIT STRING (SIZE (64))
     }
OPTIONAL, -- Cond AbsFreqSSB
ssb-periodicityServingCell           ENUMERATED { ms5, ms10, ms20, ms40,
ms80, ms160, spare2, spare1 }    OPTIONAL, -- Need S
dmrs-TypeA-Position                  ENUMERATED {pos2, pos3},
lte-CRS-ToMatchAround                SetupRelease { RateMatchPatternLTE-
CRS }                            OPTIONAL, -- Need M
rateMatchPatternToAddModList         SEQUENCE (SIZE
(1..maxNrofRateMatchPatterns)) OF RateMatchPattern    OPTIONAL, -- Need N
rateMatchPatternToReleaseList        SEQUENCE (SIZE
(1..maxNrofRateMatchPatterns)) OF RateMatchPatternId OPTIONAL, -- Need N
ssbSubcarrierSpacing                 SubcarrierSpacing
OPTIONAL, -- Cond HOAndServCellWithSSB
tdd-UL-DL-ConfigurationCommon        TDD-UL-DL-ConfigCommon
OPTIONAL, -- Cond TDD
ss-PBCH-BlockPower                   INTEGER (-60..50),
...,
[[
channelAccessMode-r16                CHOICE {
```

```
dynamic                              NULL,
semiStatic                           SemiStaticChannelAccessConfig-r16
}
OPTIONAL, -- Cond SharedSpectrum
discoveryBurstWindowLength-r16         ENUMERATED {ms0dot5, ms1, ms2,
ms3, ms4, ms5}                       OPTIONAL, -- Need R
ssb-PositionQCL-r16                    SSB-PositionQCL-Relation-r16
OPTIONAL, -- Cond SharedSpectrum
highSpeedConfig-r16                    HighSpeedConfig-r16
OPTIONAL   -- Need R
]],
  [[
highSpeedConfig-v1700                  HighSpeedConfig-v1700
OPTIONAL, -- Need R
channelAccessMode2-r17                 ENUMERATED {enabled}
OPTIONAL, -- Cond SharedSpectrum2
discoveryBurstWindowLength-r17         ENUMERATED {ms0dot125, ms0dot25,
ms0dot5, ms0dot75, ms1, ms1dot25}   OPTIONAL, -- Need R
ssb-PositionQCL-r17                    SSB-PositionQCL-Relation-r17
OPTIONAL, -- Cond SharedSpectrum2
highSpeedConfigFR2-r17                 HighSpeedConfigFR2-r17
OPTIONAL, -- Need R
uplinkConfigCommon-v1700               UplinkConfigCommon-v1700
OPTIONAL, -- Need R
ntn-Config-r17                         NTN-Config-r17
OPTIONAL   -- Need R
    ]],
    [[
featurePriorities-r17                SEQUENCE {
redCapPriority-r17                     FeaturePriority-r17
OPTIONAL, -- Need R
slicingPriority-r17                  FeaturePriority-r17
OPTIONAL, -- Need R
msg3-Repetitions-Priority-r17        FeaturePriority-r17
OPTIONAL, -- Need R
sdt-Priority-r17                     FeaturePriority-r17
OPTIONAL   -- Need R
```

```
    }
OPTIONAL   -- Need R
    ]]
}
```

Referring to Table 6, the n-TimingAdvanceOffset field (or parameter) indicates the $N_{TA,offset}$ to be applied to all uplink transmissions on the corresponding serving cell. If this field does not exist, the UE applies the values defined for the duplex mode and frequency range (FR) of the corresponding serving cell. Case 2: Method of applying predefined values to the serving cell according to duplex mode and frequency range (FR)

Table 7 illustrates the values of $N_{TA,offset}$.

[Table 7]

| Frequency range and band of cell used for uplink transmission | $N_{TA,offset}$ (Unit : Tc) |
|---|---|
| FR 1 FDD or TDD band with neither E-UTRA-NR nor NB-IoT-NR coexistence case | 25600 (Note 1) |
| FR 1 FDD band with E-UTRA-NR and/or NB-IoT-NR coexistence case | 0 (Note 1) |
| FR 1 TDD band with E-UTRA-NR and/or NB-IoT-NR coexistence case | 39936 (Note 1) |
| FR2 | 13792 |
| Note 1: | The UE identifies $N_{TA\ offset}$ based on the information n-TimingAdvanceOffset as specified in TS 38.331 [2]. If UE is not provided with the information n-TimingAdvanceOffset, the default value of $N_{TA\ offset}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{TA\ offset}$ can also be provided for a FDD serving cell. |
| Note 2: | Void |

Referring to Table 7, the value of $N_{TA,offset}$ is determined according to the frequency range (FR) and band (band) of the cell used for uplink transmission. In the case of neither E-UTRA-NR coexistence nor NB-IoT-NR coexistence, but an FR1 FDD or TDD band, the value of $N_{TA,offset}$ is 25600. In the case of E-UTRA-NR and/or NB-IoT-NR coexistence, in the case of FR1 FDD band, the value of $N_{TA,offset}$ is 0. For the FR1 TDD band in the E-UTRA-NR and/or NB-IoT-NR coexistence case, the value of $N_{TA,offset}$ is 39936. If FR2, the value of $N_{TA,offset}$ is 13792.

As described above, the UE identifies the value of $N_{TA,offset}$ based on the n-TimingAdvanceOffset field (or parameter) information. However, if the UE does not receive n-TimingAdvanceOffset field (or parameter) information, the default value of $N_{Ta,offset}$ is set to 25600 for the FR1 band. In the case of multiple UL carriers within the same timing advance group (TAG), the UE expects the same n-TimingAdvanceOffset value for all UL carriers, and a value of 39936 for $N_{TA,offset}$ may also be provided for the FDD serving cell.

Hereinafter, a timing advance group (TAG) will be described.

For cells configured by RRC and also with UL configured, TAG refers to a serving cell group using the same timing reference cell and the same timing advance value. The TAG containing the SpCell of the MAC entity is referred to as the primary TAG (PTAG: Primary Timing Advance Group), while the secondary TAG (STAG: Secondary Timing Advance Group) refers to other TAGs.

IE for TAG configuration (e.g., TAG-Config) is used to set parameters for the time-alignment group.

Table 8 illustrates TAG-Config IE.

【Table 8】

```
TAG-Config ::=                    SEQUENCE {
tag-ToReleaseList                 SEQUENCE (SIZE (1..maxNrofTAGs)) OF
TAG-Id                            OPTIONAL,    -- Need N
tag-ToAddModList                  SEQUENCE (SIZE (1..maxNrofTAGs)) OF
TAG                               OPTIONAL     -- Need N
}
TAG ::=                           SEQUENCE {
tag-Id                            TAG-Id,
timeAlignmentTimer                TimeAlignmentTimer,
...
}
TAG-Id ::=                        INTEGER (0..maxNrofTAGs-1)
```

Referring to Table 8, the tag-Id field (parameter) indicates the TAG of SpCell or SCell. This field uniquely identifies the TAG within the scope of the cell group. Additionally, the timeAlignmentTimer field (parameter) indicates the timealignmenttimer value ([ms]) for the TAG with tag-Id.

The maximum number of TAGs may be determined by the standard or by the base station, and may be, for example, 4.

IE for MAC cell group configuration (e.g., MAC-CellGroupConfig) is used to configure MAC parameters for the cell group, including discontinuous reception (DRX).

Table 9 illustrates part of MAC-CellGroupConfig IE.

【Table 9】

```
MAC-CellGroupConfig ::=            SEQUENCE {
drx-Config                         SetupRelease { DRX-Config }
OPTIONAL,      -- Need M
schedulingRequestConfig            SchedulingRequestConfig
OPTIONAL,      -- Need M
bsr-Config                         BSR-Config
OPTIONAL,      -- Need M
tag-Config                         TAG-Config
OPTIONAL,      -- Need M
phr-Config                         SetupRelease { PHR-Config }
OPTIONAL,      -- Need M
skipUplinkTxDynamic                BOOLEAN,

      ...,
   [[
csi-Mask                           BOOLEAN
OPTIONAL,      -- Need M
dataInactivityTimer                SetupRelease { DataInactivityTimer }
OPTIONAL      -- Cond MCG-Only
]],
   [[
usePreBSR-r16                      ENUMERATED {true}
OPTIONAL,      -- Need R
schedulingRequestID-LBT-SCell-r16   SchedulingRequestId
OPTIONAL,      -- Need R
lch-BasedPrioritization-r16        ENUMERATED {enabled}
OPTIONAL,      -- Need R
schedulingRequestID-BFR-SCell-r16   SchedulingRequestId
OPTIONAL,      -- Need R
drx-ConfigSecondaryGroup-r16       SetupRelease { DRX-
ConfigSecondaryGroup-r16 }                OPTIONAL      -- Need M
   ]],
   [[
enhancedSkipUplinkTxDynamic-r16    ENUMERATED {true}
```

```
OPTIONAL,     -- Need R
enhancedSkipUplinkTxConfigured-r16   ENUMERATED {true}
OPTIONAL     -- Need R
   ]],
   [[
intraCG-Prioritization-r17              ENUMERATED {enabled}
OPTIONAL,       -- Cond LCH-PrioWithReTxTimer
drx-ConfigSL-r17                        SetupRelease { DRX-ConfigSL-r17 }
OPTIONAL,       -- Need M
drx-ConfigExt-v1700                     SetupRelease { DRX-ConfigExt-v1700 }
OPTIONAL,       -- Need M
schedulingRequestID-BFR-r17             SchedulingRequestId
OPTIONAL,       -- Need R
schedulingRequestID-BFR2-r17            SchedulingRequestId
OPTIONAL,       -- Need R
schedulingRequestConfig-v1700           SchedulingRequestConfig-v1700
OPTIONAL,       -- Need M
tar-Config-r17                          SetupRelease { TAR-Config-r17   }
OPTIONAL,       -- Need M
  g-RNTI-ConfigToAddModList-r17           SEQUENCE (SIZE (1..maxG-RNTI-r17))
OF MBS-RNTI-SpecificConfig-r17          OPTIONAL,       -- Need N
g-RNTI-ConfigToReleaseList-r17          SEQUENCE (SIZE (1..maxG-RNTI-r17)) OF
MBS-RNTI-SpecificConfigId-r17        OPTIONAL,       -- Need N
g-CS-RNTI-ConfigToAddModList-r17         SEQUENCE (SIZE (1..maxG-CS-RNTI-r17))
OF MBS-RNTI-SpecificConfig-r17        OPTIONAL,       -- Need N
g-CS-RNTI-ConfigToReleaseList-r17     SEQUENCE (SIZE (1..maxG-CS-RNTI-r17))
OF MBS-RNTI-SpecificConfigId-r17    OPTIONAL,       -- Need N
allowCSI-SRS-Tx-MulticastDRX-Active-r17     BOOLEAN
OPTIONAL       -- Need M
]],
   [[
schedulingRequestID-PosMG-Request-r17 SchedulingRequestId
OPTIONAL,       -- Need R
drx-LastTransmissionUL-r17              ENUMERATED {enabled}
OPTIONAL       -- Need R
]]
}
```

Referring to Table 9, the TAG-Config IE may be configured through the tag-Config field in the MAC-CellGroup-Config IE. IE (e.g., CellGroupConfig) for cell group setting is used to configure a master cell group (MCG) or secondary cell group (SCG). A cell group is associated with one MAC entity, Radio Link Control (RLC) entities and includes a set of logical channels of a primary cell (SpCell) and one or more secondary cells (SCells).

Table 10 illustrates part of CellGroupConfig IE.

【Table 10】

```
CellGroupConfig ::=                    SEQUENCE {
cellGroupId                            CellGroupId,
rlc-BearerToAddModList                    SEQUENCE (SIZE(1..maxLC-ID)) OF
RLC-BearerConfig                       OPTIONAL,    -- Need N
rlc-BearerToReleaseList                   SEQUENCE (SIZE(1..maxLC-ID)) OF
LogicalChannelIdentity                 OPTIONAL,    -- Need N
mac-CellGroupConfig                       MAC-CellGroupConfig
OPTIONAL,    -- Need M
physicalCellGroupConfig                   PhysicalCellGroupConfig
OPTIONAL,    -- Need M
spCellConfig                              SpCellConfig
OPTIONAL,    -- Need M
sCellToAddModList                         SEQUENCE (SIZE
(1..maxNrofSCells)) OF SCellConfig                 OPTIONAL,    -- Need
N
sCellToReleaseList                        SEQUENCE (SIZE
(1..maxNrofSCells)) OF SCellIndex                  OPTIONAL,    --
Need N
      ...,
```

Referring to Table 10, the MAC-CellGroupConfig IE may be configured through the mac-CellGroupConfig field in CellGroupConfig IE. The maximum number of secondary cell groups may be determined by the standard or by the base station, and may be, for example, 3.

Timing advance group (TAG)

According to the current standard, different TA commands are possible for each timing advance group (TAG). A TAG may correspond to one or more cell groups, so the same TA command may be applied to all serving cells (s) in the cell group (s) corresponding to a specific TAG.

Specifically, the TAG is configured by RRC and may indicate a serving cell group that uses the same timing reference cell and the same timing advance value for a cell for which UL is set. The TAG including the SpCell of the MAC entity refers to the P(primary)TAG, and the S(secondary)TAG may refer to another TAG.

The maximum number of TAGs may be determined by the standard or by the base station, and may be, for example, 4.

Maintenance of uplink time alignment

The following parameters may be configured for maintenance of UL time alignment by RRC signaling for the UE.

- timeAlignmentTimer (per TAG) which controls how long the MAC entity considers the Serving Cells belonging to the associated TAG to be uplink time aligned;

The MAC entity shall:

> 1> when a Timing Advance Command MAC CE is received and if an $N_{TA}$ has been maintained with the indicated TAG;
> 2> apply the Timing Advance Command for the indicated TAG;
> 2> start or restart the timeAlignmentTimer associated with the indicated TAG;
> 1> When a Timing Advance Command is received in a Random Access Response message for a serving cell belonging to a TAG or in a Message B (MSGB) for an SpCell:
> 2> if the random access preamble was not selected by the MAC entity among the contention-based random access preambles:
> 3> apply the Timing Advance Command for this TAG;
> 3> start or restart the timeAlignmentTimer associated with this TAG.
> 2> else if the timeAlignmentTimer associated with this TAG is not running:
> 3> apply the Timing Advance Command to this TAG;
> 3> start or restart the timeAlignmentTimer associated with this TAG;
> 3> when contention resolution is not considered successful; or
> 3> after transmitting HARQ feedback for a MAC protocol data unit (PDU) including the UE Contention Resolution Identity MAC CE, when contention resolution is considered successful for a system information (SI) request:
> 4> stop the timeAlignmentTimer associated with this TAG.
> 2> else:
> 3> ignore the received Timing Advance Command.
> 1> When an Absolute Timing Advance Command is received in response to Message A (MSGA) containing C-RNTI MAC CE:
> 2> apply the Timing Advance Command for PTAG;
> 2> start or restart the timeAlignmentTimer associated with PTAG.
> 1> When a timeAlignmentTimer expires:
> 2> if the timeAlignmentTimer is associated with PTAG:
> 3> flush all HARQ buffers for all serving cells;
> 3> notify RRC to release PUCCH for all serving cells, if configured;
> 3> notify RRC to release SRS for all serving cells, if configured;
> 3> clear any configured downlink assignments and configured uplink grants;
> 3> clear any PUSCH resources for semi-persistent CSI reporting;
> 3> consider all running timeAlignmentTimers as expired;
> 3> maintain $N_{TA}$ of all TAGs.
> 2> else if the timeAlignmentTimer is associated with a STAG, then for all serving cells belonging to this TAG:
> 3> flush all HARQ buffers;
> 3> notify RRC to release PUCCH, if configured;
> 3> notify RRC to release SRS, if configured;
> 3> clear configured downlink assignments and configured uplink grants;
> 3> clear any PUSCH resources for semi-persistent CSI reporting;
> 3> maintain the $N_{TA}$ of this TAG.

If the MAC entity stops uplink transmission for an SCell due to the fact that the maximum uplink transmission timing difference between TAGs of the MAC entity or the maximum uplink transmission timing difference between TAGs of any MAC entity of the UE is exceeded, the MAC entity considers the timeAlignmentTimer associated with the SCell as expired.

When the timeAlignmentTimer associated with the TAG to which the serving cell belongs is not running, the MAC entity does not perform any uplink transmission on the serving cell except random access preamble and MSGA transmission. Additionally, when the timeAlignmentTimer associated with PTAG is not running, the MAC entity does not perform any uplink transmission on any serving cell except random access preamble and MSGA transmission on SpCell.

Meanwhile, when considering multi-TRP transmission introduced in Rel-16/17, the appropriate TA may have different values for each TRP (panel) - UE (panel) pair. For example, TA1 may be required for TRP1-UE, TA2 may be required for TRP2-UE, and TA1 and TA2 may have different values. The difference in TA values as described above may occur, for example, when the distance between TRPs and UEs is relatively large. For example, when the distance between TRP1 and the UE (Dist1) is significantly greater than the distance between TRP2 and the UE (Dist2) (Dist1 > > Dist2), TA1 may also be significantly greater than TA2 (TA1 > > TA2).

In the Rel-16/17 standard, multi-TRP transmission may be supported as follows. Different TRPs may be distinguished based on CORESET pool index, TCI state, SRS resource indicator (SRI), SpatialRelationInfo, pathloss (PL) reference RS, etc.

Meanwhile, the different TRPs may be included in the same cell group and, therefore, may be included in the same TAG. Therefore, even when different TA values are required for each TRP, according to the current standard, only the same TA value can be applied within the TAG, so TA values for each TRP cannot be supported.

In order to compensate for the above shortcomings, the present disclosure proposes a method for supporting different TA values for each TRP even within the same TAG.

The description of TRP in this disclosure is for convenience of explanation, and may also be interpreted as terms such as panel/beam. That is, the methods proposed in this disclosure can be applied/interpreted by replacing TRP with panel/beam.

In the present disclosure, a layer 1 (L1) signaling may refer to DCI-based dynamic signaling between a base station and a UE, and a layer 2 (L2) signaling may refer to higher layer signaling based on an RRC/MAC control element (CE: control element) between a base station and a UE.

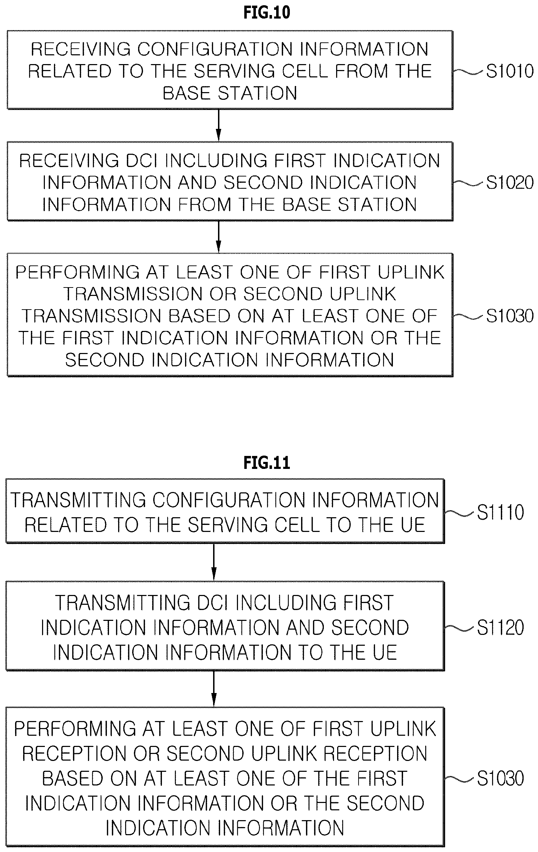

FIG. 10 is a diagram for describing an uplink transmission operation of a terminal in a wireless communication system to which the present disclosure may be applied.

The UE may receive configuration information related to the serving cell from the base station (S1010).

Here, configuration information related to the serving cell may include information about a plurality of timing advance groups (TAGs) associated with the serving cell. Each of the plurality of TAGs associated with the serving cell may correspond to a different TA value. And, the TA value corresponding to each TAG may mean an $N_{TA}$ value corresponding to the TAG ID or/and an (improved) TA command value corresponding to the TAG ID.

Additionally or alternatively, configuration information related to the serving cell may include information related to multiple TRP configuration, multiple TAG configuration for the serving cell, and uplink transmission and reception in an embodiment to be described later (e.g., any one or a combination of more than one in Embodiment 1, Embodiment 1-1, Embodiment 1-2, Embodiment 1-3, and detailed Embodiments).

The UE may receive downlink control information (DCI) including first indication information and second indication information from the base station (S1020).

As an example of the present disclosure, DCI may include information for scheduling an uplink channel. And, the first indication information includes a first SRS resource indicated by a first sounding reference signal (SRS) resource indicator field included in the DCI, and the second indication information may include the second SRS resource indicated by the second SRS resource indicator field included in the DCI.

As another example of the present disclosure, DCI may include information for scheduling a downlink channel. And, the first indication information includes information related to the first uplink TCI (transmission configuration indication) state indicated by the transmission configuration indication field included in the DCI (e.g., RS corresponding to the first uplink TCI state, etc.), and the second indication information may include information related to the second uplink TCI state indicated by the TCI field (e.g., RS corresponding to the second uplink TCI state, etc.).

The UE may perform at least one of first uplink transmission or second uplink transmission based on at least one of the first indication information or the second indication information (S1030).

As an example, based on the first uplink transmission being performed using first indication information (e.g., SRS resource indicated through the first SRI field or/and the first UL TCI state, etc.), the first transmission timing of the first uplink transmission may be based on the first TA value associated with the first TAG corresponding to the first indication information among the plurality of TAGs. And, based on the second uplink transmission being performed using the second indication information (e.g., SRS resource indicated through the second SRI field or/and the second UL TCI state, etc.), the second transmission timing of the second uplink transmission may be based on the second TA value associated with the second TAG corresponding to the second indication information among the plurality of TAGs.

Based on at least one of the first uplink transmission or the second uplink transmission being performed by the UE, an offset value (e.g., gap symbol, etc.) between the first transmission timing and the second transmission timing may be defined.

As another example, based on at least one of the first uplink transmission or the second uplink transmission being performed by the UE, the UE may receive information about the offset value between the first transmission timing and the second transmission timing from the base station. Here, information about the offset value between the first transmission timing and the second transmission timing may be based on channel state information (CSI) feedback transmitted from the terminal to the base station or terminal capabilities.

As another example of the present disclosure, the UE may receive configuration information related to the first physical uplink control channel (PUCCH) group and the second PUCCH group from the base station.

Here, the first transmission timing may be based on the first TA value associated with the first TAG corresponding to the first PUCCH group among the plurality of TAGs, and the second transmission timing may be based on the second TA value associated with the second TAG corresponding to the second PUCCH group among the plurality of TAGs. And, one or more spatial relation info may be configured for at least one PUCCH resource included in each of the first PUCCH group and the second PUCCH group.

As another example of the present disclosure, the UE may receive a timing advance command for each of the first TAG and the second TAG from the base station. Here, the first TA value may be based on the SCS of the BWP for which the largest subcarrier spacing (SCS) is configured among one or more bandwidth parts (BWPs) corresponding to the first TAG. And, the second TA value may be based on the SCS of the BWP for which the largest SCS is configured among one or more BWPs corresponding to the second TAG.

As another example, the first TA value may be based on the SCS of the BWP for which the largest SCS is configured among one or more BWPs corresponding to the second TAG.

As another example, the first TA value and the second TA value may be based on the SCS of the BWP for which the largest SCS is configured among one or more BWPs corresponding to a specific TAG among the first TAG and the second TAG.

FIG. 11 is a diagram for describing an uplink reception operation of a base station in a wireless communication system to which the present disclosure may be applied.

The base station may transmit configuration information related to the serving cell to the UE (S1110). Here, configuration information related to the serving cell has been described with reference to FIG. 10, so redundant description will be omitted.

The base station may transmit DCI including first indication information and second indication information to the UE (S1120). Additionally or alternatively, the base station may transmit control information including a timing advance command for each of a plurality of (enhanced) TAGs configured in the serving cell to the UE.

The base station may perform at least one of first uplink reception and second uplink reception based on at least one of first indication information or second indication information (S1130). The reception timing of the first uplink may be based on the first TA value associated with the first TAG corresponding to the first indication information among the plurality of TAGs, and the reception timing of the second uplink may be based on the second TA value associated with the second TAG corresponding to the second indication information among the plurality of TAGs.

Hereinafter, a method for supporting different TA values for each TRP within the same TAG and a method for supporting different TA values for each TRP through multiple TAGs will be described in detail.

Embodiment 1

Embodiment 1 relates to a method for improving a timing advance command, a method for defining sub-groups that can have different TAs within a single TAG for this, and a method for configuring/indicating the UE for TA for a specific sub-group in the improved timing advance command. In describing the present disclosure, a sub-group that may have different TAs within a single TAG is named TASG.

The TA value of the UE may be defined through FIGS. 7 to 9 and the above description related thereto. Among the values configuring $N_{TA}$, the $N_{TA}$ value may be configured/indicated for the UE through MAC-CE signaling (i.e. timing advance command).

For the above-described timing advance command, MAC-CE signaling including a TASG ID (i.e., enhanced timing advance command MAC-CE) may be introduced.

Here, the enhanced timing advance command MAC-CE may include a TASG ID, a TAG ID corresponding to the TASG ID, and/or an enhanced timing advance command for resources corresponding to the TASG ID in the TAG ID.

The enhanced timing advance command MAC-CE may be defined as an absolute value for the corresponding TASG ID and/or a relative value for the TAG ID corresponding to the corresponding TASG ID.

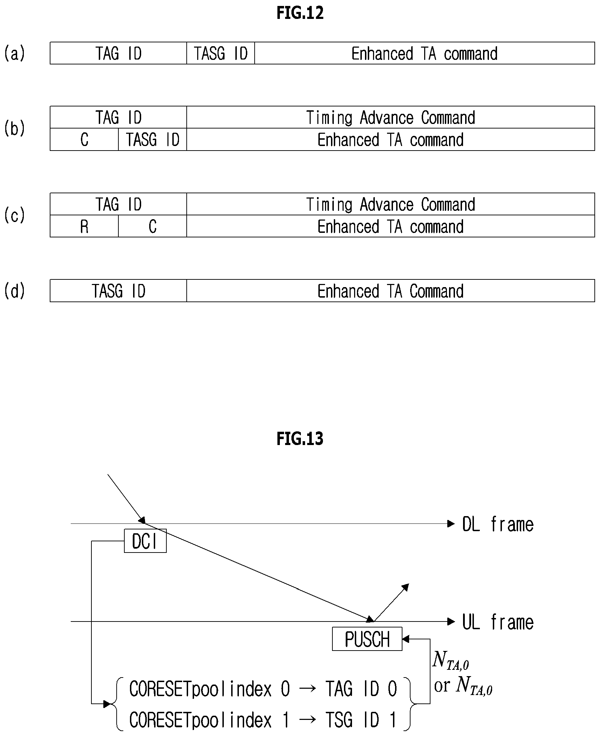

As an example, the enhanced timing advance command MAC-CE may be configured as shown in FIG. 12 (i.e., (a), (b), (c), and (d) of FIG. 12. In FIG. 12, R is a reserved bit, and C means a bit indicating the presence or absence of a TASG ID/enhanced TA command. Here, the TASG ID, multi-TA indicator, and/or indication fields for sub TA may be defined separately.

Additionally or alternatively, an enhanced timing advance command indicating an absolute value for a specific TASG ID may be defined/implemented as in Equation 3.

【Equation 3】

$$N_{TA\_new,i} = N_{TA\_old,i} + (\widetilde{T_{A,i}} - 31) * 16 * 64/2^{\mu}, N_{TA,i} = (\widetilde{T_{A,i}} - 31)\, 16 * 64/2^{\mu}, N_{TA,i}$$
$$= \widetilde{T_{A,i}} * 16 * 64/2^{\mu}$$

In Equation 3, $N_{TA,i}$ refers to the $N_{TA}$ value corresponding to TASG ID i, and $\widetilde{T_{A,i}}$ may refer to the enhanced TA command corresponding to TASG ID i.

Additionally or alternatively, an enhanced timing advance command indicating a relative value to the TAG ID may be defined/implemented as in Equation 4.

【Equation 4】

$$N_{TA\_new,i} = N_{TA\_old,i} + \left(T_{A,last} + \widetilde{T_{A,i}} - 31\right) * 16 * 64/2^{\mu}, N_{TA,i}$$
$$= \left(T_{A,last} + \widetilde{T_{A,i}} - 31\right) 16 * 64/2^{\mu}, N_{TA,i}$$

In Equation 4, $N_{TA,i}$ refers to the $N_{TA}$ value corresponding to TASG ID i, $N_{A,last}$ refers to the timing advance value that the UE received last (or most recently) in response to TAG ID x corresponding to TASG ID i, and $\widetilde{T_{A,i}}$ refers to an enhanced TA command value corresponding to TASG ID i. Here, 'relative value' may mean a relative value (e.g., $N_{A,last} + \widetilde{T_{A,i}} - 31$) with the TA value of the TAG to which the TASG belongs.

And, in the case of a specific TASG (e.g., TASG ID 0), it may be defined to use the $N_{TA}$ value corresponding to the TAG as is.

Additionally or alternatively, offset values between different TASGs may be configured/indicated for the UE. The above-described offset value may be configured/indicated through RRC/MAC-CE/DCI, etc. For example, a periodic or semi-persistent offset value may be configured/indicated for different TASG ID 0 and TASG ID 1 based on the deployment of TRP/panel, etc.

For example, when applying the TA value of TA 1 to TRP 1, as the above-described offset value is configured/indicated, 'TA value of TA 1 + offset value + TA value of TA 2' may be applied to TRP 2. Accordingly, the payload for indicating/setting the TA value for each TASG may be reduced by the offset value.

The numbers and/or ranges related to TA, TAG, TASG, offset values, etc. described above are examples and do not limit the scope of the present disclosure. Accordingly, other numbers and/or ranges may be applied to the examples described above depending on the adjustment range and/or numerology (e.g., SCS) of the TA value, etc.

Embodiment 1-1

Based on Example 1, when defining sub-groups that can have different TAs within a single TAG, Embodiment 1-1 relates to a method for configuring/indicating sub-groups corresponding to UL resources, and a method of transmitting by applying the TA value configured/indicated for the sub-group corresponding to each UL resource.

As an example of the present disclosure, when scheduling UL resources (e.g., PUSCH/SRS/PUCCH/PRACH, etc.) based on DCI, the TASG ID may be indicated/set according to a method described later.

Method 1: In the scheduling DCI that schedules UL resources, a DCI field/RNTI is defined to indicate the TASG ID, and the corresponding TASG ID can be explicitly indicated using the DCI field/RNTI.

Method 2: The TASG ID may be implicitly indicated based on characteristics corresponding to the scheduling DCI for scheduling UL resources.

As an example of Method 2 (Method 2-1), the corresponding TASG ID may be implicitly indicated by CORESETpoolIndex, CORESET (or, a group of CORESETs), SS (search space) set (or group of SS sets) and/or TCI state (or group of TCI states) related to scheduling DCI.

As an example, as shown in FIG. 13, Assume that the UE receives DCI (e.g., DCI for scheduling PUSCH) corresponding to CORESETpoolIndex 0 and CORESETpoolIndex 1 from the base station. Here, CORESETpoolIndex 0 may correspond to TASG ID 0, and CORESETpoolIndex 1 may correspond to TASG ID 1. The UE may transmit PUSCH using TASG ID 0 corresponding to CORESETpoolIndex 0 or/and TASG ID 1 corresponding to CORESETpoolIndex 1.

As an example of Method 2 (Method 2-2), a SRI (or group of SRI), spatialrelationinfo (or group of spatialrelationinfo), Path loss Reference RS (or group of PathlossReferenceRS), SRI (or group of SRI), spatialrelationinfo (or group of spatialrelationinfo), PathlossReferenceRS (or group of PathlossReferenceRS) may be indicated implicitly.

As an example of Method 2 (Method 2-3), the corresponding TASG ID may be implicitly indicated based on an SRI (or group of SRIs) mapped/connected to a plurality of SRI fields (e.g., two SRI fields).

Specifically, when an S-DCI-based M-TRP PUSCH repetitive transmission operation is performed, two SRI fields may be included in the UL grant DCI. Each SRI field may correspond to a different TRP/panel. The UE may use the TA value for TASG ID 0 corresponding to the SRI (or group of SRIs) indicated by the first SRI field of the two SRI fields. Additionally, the UE may use the TA value for TASG ID 1 corresponding to the SRI (or group of SRIs) indicated by the second SRI field of the two SRI fields.

Here, in the case of S-DCI-based M-TRP transmission operation, all scheduling information for data transmitted by M-TRP must be transmitted through one DCI. Therefore, S-DCI-based M-TRP transmission operation may be performed in an ideal BH (ideal BackHaul) environment in which dynamic cooperation between two TRPs is possible.

As an example of Method 2 (Method 2-4), the corresponding TASG ID may be implicitly indicated using the integrated TCI state framework. For example, assume that two UL TCI states are indicated through the DL DCI format. The first UL TCI state may correspond to TASG ID 1, and the second UL TCI state may correspond to TASG ID 2.

Here, the UL resource/channel/transmission occasion (TO) using the first (/second) UL TCI state may follow the TA value associated with TASG ID 1 (/2).

In addition, TO may refer to each channel transmitted at different times when multiple channels are TDM, it may refer to each channel transmitted at different frequencies/RBs when multiple channels are FDM, and it may refer to each channel transmitted to a different layer/beam/DMRS port when multiple channels are SDM. As an example, one TCI state may be mapped to each TO. When transmitting the same channel repeatedly, the transmitting end may transmit a complete DCI/data/UCI to one TO, and the receiving end may receive multiple TOs to increase the reception success rate.

As an example of Method 2 (Method 2-5), the corresponding TASG ID may be implicitly indicated based on the PUCCH resource group. For example, each PUCCH resource group 0/1 may correspond to a TA value associated with each TASG ID 1/2. Here, the PUCCH resources of each PUCCH resource group may be applied only when one spatial relationship information is configured.

As an example of Method 2 (Method 2-6), the corresponding TASG ID may be implicitly indicated based on the UE Tx timing error group (TEG) ID.

Specifically, the UE may be configured to report UE TEG according to UE capabilities. Here, the TEG may be a UE TxTEG associated with the transmission of one or more UL SRS resources for positioning purposes with a Tx timing error difference within a certain margin.

For example, a timing error group (TEG) introduced for positioning purposes may be associated with/corresponding to a panel. The mapping relationship between each TEG ID and TASG ID may be configured/indicated by the base station, but may be defined in advance.

As another example of the present disclosure, when UL resources (e.g., PUSCH/SRS/PUCCH/PRACH, etc.) are scheduled based on RRC/MAC-CE, the TASG ID may be indicated/configured according to a method described later.

Method 1: The TASG ID corresponding to the UL resource may be added to the setting value for the UL resource.

Meanwhile, Embodiment 1 and Embodiment 1-1 described a method of defining a plurality of TASGs within a single TAG and applying independent/different TA values to each TASG.

Additionally or alternatively, multiple TAG IDs may be configured in the serving cell, and independent/different TA values may be applied to different UL resources/channels (e.g., PUSCH/PUCCH/SRS/PRACH, etc.) using different TAG IDs.

Specifically, one tag-ID may be configured for one serving cell through the "ServingCellConfig information element" of the basic wireless communication system. According to the present disclosure, multiple tag-IDs may be configured in one serving cell, and different TA values according to each tag-ID may be applied to UL resources/channels.

The method according to various embodiments of the present disclosure (e.g., Embodiment 1, Embodiment 1-1, Embodiment 1-2, Embodiment 1-3) may be applied even when a plurality of TAG IDs related to different TA values are configured in the serving cell. That is, in various embodiments of the present disclosure, 'multiple TASG IDs within a single TAG' can be replaced with 'multiple TAG IDs within a single serving cell'.

Specifically, according to various embodiments of the present disclosure, a method for configuring/indicating multiple TAG IDs within a single serving cell, a method of configuring/indicating a TAG ID corresponding to a UL resource (corresponding to the serving cell) when multiple TAG IDs are configured/indicated, and for each UL resource, a method of transmitting by applying the configured/indicated TA value to the TAG ID corresponding to the UL resource may be applied.

As an example, when multiple tag-Ids are configured/indicated for a serving cell, in Embodiment 1-1, the method applied to a plurality of 'sub-groups' is applied to a plurality of 'tag-Id', so that independent/ Different TA values may be applied.

When multiple TASGs are defined that refer to a single TAG (i.e., when multiple TASGs are defined within a single TAG), the maximum number of TAGs (i.e. 'maxNrofTAGs') (e.g. 4) defined in the current standard may not be expanded, thereby reducing the impact on the standard. Additionally, signaling overhead can be reduced by defining a small range of candidate values for TASG.

Assume that multiple TAG IDs are configured/defined for a single cell. If the maximum number of TAGs defined in the current standard is maintained, extending/using the TRP concept to TAGs may result in an insufficient number of TAGs for independent TA configuration/indication. When expanding the number of TAGs, the standard impact associated with that part may increase. The procedures in the basic wireless communication system defined for each TAG can be reused by extending them to the TRP concept.

In Embodiment 1-1, a method of configuring/indicating independent/different TA values for each TASG and applying independent/different TA values based on the corresponding TASG for each UL resource was described. Here, TASG is not intended to limit the scope of the present disclosure.

Therefore, even when TASG is not explicitly defined, the function of TASG in Embodiment 1-1 may be replaced based on different TA values that are independently managed (for each TRP/panel). Additionally, different TA values may be applied to each of the different UL resources based on the embodiment of the mapping relationship between TASG and UL resources.

Additionally or alternatively, when UL resources corresponding to different TASGs (or different TAGs) are transmitted, an offset value (e.g., gap symbol/slot value, etc.) may be defined between two UL resources so that stable transmission can be performed considering the time required for panel switching between the different UL resources.

The offset value between two UL resources may be configured/indicated from the base station to the UE based on L1/L2 signaling. Additionally or alternatively, a fixed offset value between two UL resources may be defined between the base station and the UE. Additionally or alternatively, the UE may transmit a report containing information about the offset value between two UL resources (e.g., CSI feedback/UE capability report, etc.), and the base station may configure/indicate an appropriate offset value for the UE based on a report containing information about the offset value between two UL resources.

Embodiment 1-2

Embodiment 1-2 relates to a method of updating the timeAlignmentTimer of a TAG when receiving an improved timing advance command corresponding to a specific TASG within a specific TAG based on Embodiment 1.

Here, the 'specific TASG' may be configured/indicated to the UE based on L1/L2 signaling, but is not limited thereto and may be defined by fixed rules. Additionally or alternatively, the 'specific TASG' may be determined based on the UE's reported value (error, CSI feedback/UE capability report, etc.), or the base station may configure/indicate the 'specific TASG' for the UE based on the UE's reported value.

As an example, a specific TASG may be a single TASG (e.g., TASG 0 or TASG 1, etc.) within a specific TAG. As another example, a specific TASG may be a plurality of TASG groups (e.g., TASG 0/1 or TASG 0/2, etc.) within a specific TAG.

A specific TAG may be composed of one or more cell groups and/or multiple serving cells. On the other hand, in the case of M-TRP operation, a related operation (e.g., timeAlignmentTimer update operation, etc.) may be supported only in a specific cell group/serving cell among a plurality of cell groups/serving cells constituting the TAG.

Accordingly, the timeAlignmentTimer of the TAG may be updated based on the TRP that can correspond to all cell groups/serving cells constituting the TAG. For example, assume that each TRP 1/2 corresponds to each TASG 0/1 and that different TA values are managed for each TRP accordingly. Additionally, it is assumed that TRP 1 can operate in the entire cell group/all serving cells, but TRP 2 can operate only in a specific serving cell. Here, the timeAlignmentTimer of the TAG may be updated based on the timing advance command for TRP 1. When updating the timeAlignmentTimer of the TAG based on the timing advance command for TRP 2, TRP 2 should synchronize within the serving cell that cannot operate, but may not be able to do so and may operate based on an incorrect synchronization value.

Although the description of the present disclosure is based on TRP, the description of the present disclosure can be applied even when considering multi-panels of a base station/UE.

Additionally or alternatively, even if an enhanced timing advance command corresponding to a TASG within a specific TAG is received, the timeAlignmentTimer of the TAG can be updated. If any one of the plurality of TRPs corresponding to a single TAG is indicated/configured a new TA value according to the method described above, the timeAlignmentTimer may be updated assuming that the UL synchronization is correct.

Additionally or alternatively, a timeAlignmentTimer may be defined for each TASG, and the timeAlignmentTimer may be updated for each TASG depending on whether a timing advance command for the corresponding TASG is received.

Embodiment 1-3

In a basic wireless communication system, if the UE has multiple active UL BWPs in the same TAG, including UL BWPs on both UL carriers in the serving cell, the timing advance command value may be relative to the largest SCS among several active UL BWPs. The applicable $N_{TA\_new}$ value for the UL BWP with lower SCS may be rounded to align with the timing advance granularity for the UL BWP with lower SCS, and at the same time, it can meet timing advance accuracy requirements.

When an enhanced timing advance command is configured/indicated for each TASG based on the Embodiment 1, Embodiment 1-3 relates to a method of defining an enhanced timing advance command value based on the SCS of the BWP corresponding to the largest SCS among one or more BWPs corresponding to each TASG.

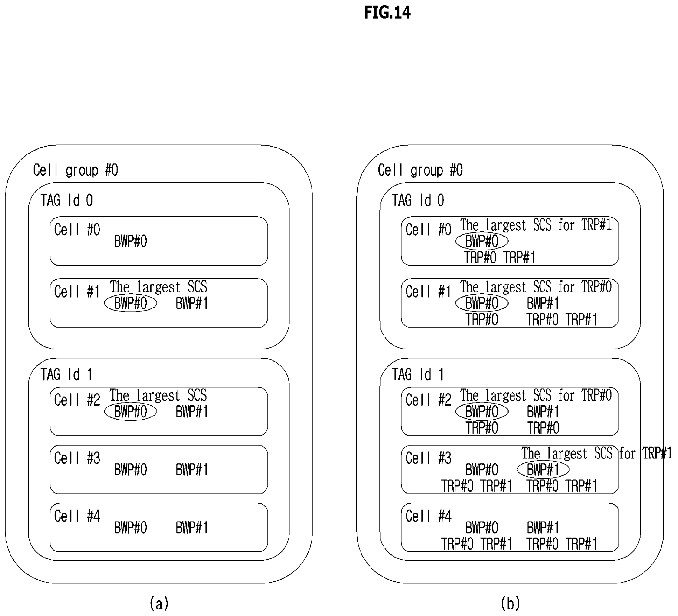

FIG. 14 (a) is a diagram for describing a method of configuring/indicating a timing advance command value based on the largest SCS in a basic wireless communication system. In a basic wireless communication system, the timing advance command value is defined to be applied based on the SCS of the BWP corresponding to the largest SCS among all BWPs.

FIG. 14 (b) relates to a method of defining an enhanced timing advance command value based on the SCS of the BWP corresponding to the largest SCS among one or more BWPs corresponding to the TASG according to an embodiment of the present disclosure.

There may be differences in the TRP (i.e. TASG) that can operate for each BWP. Therefore, in order to accurately adjust the TA value for each TRP, the TA value for each TRP may be defined based on the largest SCS for each TRP.

Referring to (b) of FIG. 14, in TAG Id 0, TRP #0 may correspond to BWP #0 of cell #0 and BWP #0/#1 of cell #1. And, TRP #1 may correspond to BWP #0 of cell #0 and BWP #1 of cell #1. Therefore, TRP #0 may define the TA value for TASG ID 0 of TAG Id 0 based on the largest SCS (i.e., cell #1 to BWP #0) among the SCS for the three BWPs. TRP #1 may define the TA value for TASG ID 1 of TAG Id 0 based on the largest SCS (i.e., cell #0 to BWP #0) among the SCS for two BWPs.

Although the above description is based on TRP, the above description may be applied even when considering multi-panels of a base station/UE.

In order to apply the above-described Embodiments 1-3, the Embodiment described below may be applied as a method for distinguishing TRP/panel (i.e., TASG) from a single BWP.

Example 1 : Method of explicitly configuring/indicating TRP/panel/TASG information operated/supported by BWP

Example 2 : Method for implicitly configuring/indicating TRP/panel/TASG information based on configuration values for each BWP

Example 2-1 : TRP/panel/TASG information may be configured/indicated based on CORESETPoolIndex. For example, if CORESETPoolIndex is not configured or CORESETPoolIndex 0 is configured, the UE/base station may recognize the BWP as a BWP corresponding to TASG ID 0. As another example, if CORESETPoolIndex 1 is configured, the UE/base station may recognize the BWP as a BWP corresponding to TASG ID 1.

Example 2-2 : TRP/panel/TASG information may be configured/indicated based on the SRS resource set. For example, if the SRS resource set for the same usage is set to one or less, the UE/base station may recognize the BWP as a BWP corresponding to TASG ID 0. If two or more SRS resource sets for the same purpose are configured, the UE/base station may recognize the BWP as the BWP corresponding to TASG ID 0/1.

Example 2-3 : Assume that two SRI fields are configured/included in the UL grant DCI. As an example, the UE/base station may recognize the BWP as the BWP corresponding to TASG ID 0 for the first SRI field. As another example, the UE/base station may recognize the BWP as the BWP corresponding to TASG ID 1 for the second SRI field.

Additionally or alternatively, if two or more SRS resource sets for CB/NCB purposes are configured, the UE/base station may recognize the BWP as the BWP corresponding to TASG ID 0 for the first SRS resource set. As another example, the UE/base station may recognize the BWP as the BWP corresponding to TASG ID 1 for the second SRS resource set.

Example 2-4 : When multiple spatial relation information (i.e., spatialRelationInfo) is configured/activated for each PUCCH resource in BWP configuration, the UE/base station may recognize the BWP as the BWP corresponding to TASG ID 0 for the first spatialRelationInfo. As another example, the UE/base station may recognize the BWP as the BWP corresponding to TASG ID 1 for the second spatialRelationInfo.

Example 2-5 : The joint TCI state framework can be used to distinguish TRP/panel in a (single) BWP. For example, if the 1 TCI state is configured for a specific BWP, the base station/UE may recognize the BWP as a BWP with TRP 1. If 2 TCI state is configured in a specific BWP, the base station/UE may recognize the BWP as a BWP of TRP 1 and at the same time as a BWP of TRP 2.

Additionally or alternatively, it may be configured/indicated/defined to apply the largest SCS for TASG ID #y to TASG ID #x as is. The method described above may be applied when the timing advance command for TASG ID #x is configured/indicated in the form of an offset based on TASG ID #y.

Additionally or alternatively, it may be defined to calculate the TA value based on the same SCS for multiple TASGs corresponding to a single TAG. For example, it may be defined to calculate the TA value according to the largest SCS for the TASG of the first TASG/lowest/highest index among a plurality of TASGs corresponding to a single TAG.

Additionally or alternatively, a reference TRP may be configured/indicated/defined, and a TA value may be applied based on the largest SCS corresponding to the reference TRP.

Additionally or alternatively, the UE may not expect a numerology larger than the numerology of the reference TRP (i.e., SCS) to be configured. Additionally or alternatively, when two TAs are configured/indicated, they can be configured/indicated/defined so that the relaxed requirements compared to the requirements are applied. Additionally or alternatively, the TA value may be defined as a value corresponding to the largest SCS among (activated) BWPs corresponding to a plurality of TRPs (e.g., two TRPs).

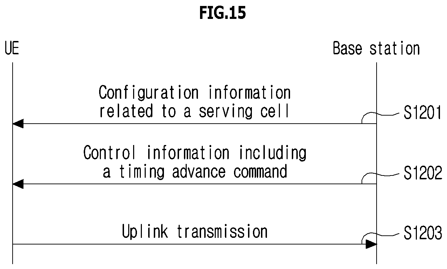

FIG. 15 is a diagram for describing the signaling procedure of the network side and the UE according to an embodiment of the present disclosure.

FIG. 15 shows an example of signaling between a network side and a terminal (UE) in an M-TRP situation to which the Embodiments (e.g., Embodiment 1, Embodiment 1-1, Embodiment 1-2, Embodiment 1-3 or a combination of one or more of the detailed Embodiments) of the present disclosure described above can be applied.

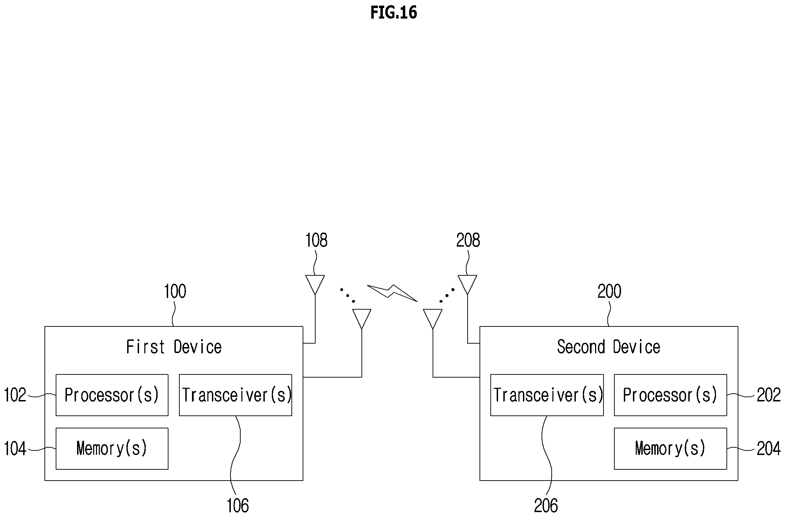

Here, the UE/network side is an example and may be replaced with various devices as described with reference to FIG. 16. FIG. 15 is for convenience of explanation and does not limit the scope of the present disclosure. Additionally, some step(s) shown in FIG. 15 may be omitted depending on the situation and/or settings. Additionally, in the operation of the network side/UE in FIG. 15, the above-described uplink transmission/reception operation, M-TRP-related operation, etc. may be referenced or used.

In the following description, the network side may be one base station including multiple TRPs, or may be one cell including multiple TRPs. Alternatively, the network side may include a plurality of remote radio heads (RRH)/remote radio units (RRU). For example, ideal/non-ideal backhaul may be set between TRP 1 and TRP 2, which constitute the network side. In addition, the following description is based on multiple TRPs, but it can be equally extended and applied to transmission through multiple panels/cells, and can also be extended and applied to transmission through multiple RRHs/RRUs, etc.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID).

For example, if one UE is configured to transmit and receive with multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive configuration information related to the serving cell (via/using TRP1 and/or TRP2) from the network side (S1201).

The configuration information may include information related to multiple TRP settings, multiple TAG settings for serving cells, and uplink transmission and reception described in the above-mentioned proposed method (e.g., any one or a combination of more than one in Embodiment 1, Embodiment 1-1, Embodiment 1-2, and detailed Embodiments).

The configuration information may be information used to configure a cell group including one or more serving cells (e.g., CellGroupConfig, see Table 10), or the configuration information may be information used to configure MAC parameters for a cell group including one or more serving cells (e.g., MAC-CellGroupConfig, see Table 9).

In addition, the configuration information may include information about the correspondence relationship between each TASG defined/configure within the plurality of TAGs and at least one of CORESET, SS set, TCI state, SRI, spatial relationship information, PL RS, BWP, and TAG index.

As another example, the configuration information may include information about the correspondence relationship between each of the plurality of TAGs and at least one of CORESET, SS set, TCI status, SRI, spatial relation information, PL RS, BWP, and TAG index.

Additionally, the configuration information may include information about a plurality of timing advance groups (TAGs) associated with the serving cell (or a cell group including one or more serving cells) (e.g., TAG -Config).

For example, when multiple TAGs are configured in the serving cell (or a cell group including one or more serving cells), information about the plurality of TAGs may correspond to a plurality of TAG-Configs. Alternatively, when one TAG is configured in the serving cell (or a cell group including one or more serving cells) and a plurality of sub-TAGs within the one TAG are configured, the information about the plurality of TAGs may correspond to information about the plurality of sub-TAGs within one TAG-Config.

The configuration information may be transmitted through a higher layer (e.g., RRC, MAC CE). The configuration information may include information related to uplink transmission based on a configured grant (CG). Additionally, if the configuration information is defined or configured in advance, the corresponding step may be omitted.

For example, the operation of the UE (100 or 200 in FIG. 16) in step S1201 described above to receive the configuration information from the network side (200 or 100 in FIG. 16) can be implemented by the device in FIG. 16, which will be described below. For example, referring to FIG. 16, one or more processors 102 may control one or more transceivers 106 and/or one or more memories 104, etc. to receive the setting information, and one or more transceivers 106 may receive the configuration information from the network side.

The UE may receive control information including an (improved) timing advance command (via/using TRP1 and/or TRP2) from the network side (S1202).

Here, the control information may correspond to a random access response or TA command MAC CE, but is not limited thereto. Additionally, as described above, the TA command may indicate the NTA value.

Here, control information (e.g., random access response or TA command MAC CE) may include a TA command for each TASG belonging to a plurality of TAGs, and the TA command for each TAGS may individually indicate a TA value (e.g., NTA value) used to control uplink timing adjustment.

As another example, control information (e.g., random access response or TA command MAC CE) may include a TA command for each TAG, and the TA command for each TAG may individually indicate a TA value (e.g., NTA value) used to control uplink timing adjustment.

Here, for example, the TA command may indicate a difference value for each TAG compared to the TA value used to control uplink timing adjustment for the reference TAG.

Alternatively, if the plurality of TAGs correspond to a plurality of TASGs in a single TAG configured for the serving cell (or a cell group including one or more serving cells), the TA command may indicate an offset for each TASG based on the TA value used to control uplink timing adjustment for the single TAG. Alternatively, the TA command may individually indicate a TA value (e.g., NTA value) used to control uplink timing adjustment for each TASG.

For example, the operation of the UE (100 or 200 in FIG. 16) in step S1202 described above to receive the control information from the network side (200 or 100 in FIG. 16) can be implemented by the device in FIG. 16, which will be described below. For example, referring to FIG. 16, one or more processors 102 may control one or more transceivers 106 and/or one or more memories 104, etc. to receive the control information, and one or more transceivers 106 may receive the control information from the network side.

The UE may perform uplink transmission (via/using TRP1 and/or TRP2) from the network side (S1203).

Here, uplink transmission may be transmitted at a transmission timing determined in consideration of the timing relationship with the downlink frame previously described in FIG. 7.

For example, based on the uplink transmission being associated with a specific TAG among a plurality of TAGs, the transmission timing of the uplink transmission may be determined based on a TA command for the specific TAG. The method according to the examples of the present disclosure (e.g., Embodiment 1, Embodiment 1-1, Embodiment 1-2, Embodiment 1-3, or a combination of one or more of the detailed Embodiments) may be applied to determine/configure-e/indicate a specific TAG among a plurality of TAGs.

Alternatively, although not shown in FIG. 15, the UE may receive a DCI scheduling the uplink transmission from the base station before the uplink transmission. In this case, the specific TAG associated with the uplink transmission may be indicated by DCI.

For example, the UE may receive a DCI scheduling uplink/downlink from the network side. Additionally, if the control information is defined or configured in advance, the corresponding step may be omitted.

Here, DCI may be transmitted to the terminal through at least one CORESET included in the CORESET pool activated by MAC CE. As another example, DCI may be transmitted to the UE through at least one CORESET activated by MAC CE.

For example, the operation of the UE (100 or 200 in FIG. 16) performing the uplink transmission to the network side (200 or 100 in FIG. 16) in step S1203 described above can be implemented by the device in FIG. 16, which will be described below. For example, referring to FIG. 16, one or more processors 102 may control one or more transceivers 106 and/or one or more memories 104, etc. to perform the uplink transmission, and one or more transceivers 106 may perform the uplink transmission to the network side.

General Device to which the Present Disclosure may be applied

FIG. 16 is a diagram which illustrates a block diagram of a wireless communication system according to an embodiment of the present disclosure.

In reference to FIG. 16, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/-circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206.

One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure. One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for of performing uplink transmission by a user equipment (UE) in a wireless communication system, the method comprising:

   receiving configuration information related to a serving cell from a base station, wherein the configuration information including information about a plurality of timing advance groups (TAGs) associated with the serving cell;
   receiving, from the base station, downlink control information (DCI) including first indication information and second indication information; and
   performing at least one of first uplink transmission or second uplink transmission based on at least one of the first indication information or the second indication information,
   wherein based on the first uplink transmission being performed using the first indication information, a first transmission timing of the first uplink transmission is based on a first TA value associated with a first TAG corresponding to the first indication information among the plurality of TAGs, and
   wherein based on the second uplink transmission being performed using the second indication information, a second transmission timing of the second uplink transmission is based on a second TA value associated with a second TAG corresponding to the second indication information among the plurality of TAGs.

2. The method of claim 1, wherein:

   the first indication information includes a first sounding reference signal (SRS) resource indicated by a first sounding reference signal (SRS) resource indicator field included in the DCI, and
   the second indication information includes a second SRS resource indicated by the second SRS resource indicator field included in the DCI.

3. The method of claim 1, wherein:

   the first indication information includes information related to a first uplink transmission configuration indication (TCI) state indicated by a TCI field included in the DCI, and
   the second indication information includes information related to a second uplink TCI state indicated by the TCI field.

4. The method of claim 1, wherein:
   based on at least one of the first uplink transmission or the second uplink transmission being performed, an offset value between the first transmission timing and the second transmission timing is defined.

5. The method of claim 1, wherein:
   based on at least one of the first uplink transmission or the second uplink transmission being performed, information about an offset value between the first transmission timing and the second transmission timing is received from the base station.

6. The method of claim 5, wherein:
   information about the offset value between the first transmission timing and the second transmission timing is based on channel state information (CSI) feedback transmitted from the terminal to the base station or UE capability.

7. The method of claim 1, wherein:
   based on configuration information related to a first physical uplink control channel (PUCCH) group and a second PUCCH group being received from the base station:

   the first transmission timing is based on a first TA value associated with the first TAG corresponding to a first PUCCH group among the plurality of TAGs, and

the second transmission timing is based on a second TA value associated with the second TAG corresponding to a second PUCCH group among the plurality of TAGs.

8. The method of claim 7, wherein:
at least one spatial relation information is configured for at least one PUCCH resource included in each of the first PUCCH group and the second PUCCH group.

9. The method of claim 1, wherein:
based on a timing advance command for each of a first TAG and a second TAG being received from the base station:

the first TA value is based on a subcarrier spacing (SCS) of a bandwidth part (BWP) in which a largest SCS is configured among at least one BWP corresponding to the first TAG, and

the second TA value is based on a SCS of a BWP in which a largest SCS is configured among at least one BWP corresponding to the second TAG.

10. The method of claim 1, wherein:
the first TA value and the second TA value are based on a SCS of a BWP in which a largest SCS is configured among at least one BWP corresponding to a specific TAG among the first TAG and the second TAG.

11. A user equipment (UE) performing uplink transmission in a wireless communication system, the UE comprising:

at least one transceiver; and

at least one processor coupled to the at least one transceiver,

wherein the at least one processor is configured to:

receive, through the at least one transceiver, configuration information related to a serving cell from a base station, wherein the configuration information including information about a plurality of timing advance groups (TAGs) associated with the serving cell;

receive, from the base station through the at least one transceiver, downlink control information (DCI) including first indication information and second indication information; and

perform at least one of first uplink transmission or second uplink transmission based on at least one of the first indication information or the second indication information,

wherein based on the first uplink transmission being performed using the first indication information, a first transmission timing of the first uplink transmission is based on a first TA value associated with a first TAG corresponding to the first indication information among the plurality of TAGs, and

wherein based on the second uplink transmission being performed using the second indication information, a second transmission timing of the second uplink transmission is based on a second TA value associated with a second TAG corresponding to the second indication information among the plurality of TAGs.

12. A method of performing uplink reception by a base station in a wireless communication system, the method comprising:

transmitting configuration information related to a serving cell to a user equipment (UE), wherein the configuration information including information about a plurality of timing advance groups (TAGs) associated with the serving cell;

transmitting, to the UE, downlink control information (DCI) including first indication information and second indication information; and

performing at least one of first uplink reception or second uplink reception based on at least one of the first indication information or the second indication information,

wherein based on the first uplink reception being performed using the first indication information, a first transmission timing of the first uplink transmission is based on a first TA value associated with a first TAG corresponding to the first indication information among the plurality of TAGs, and

wherein based on the second uplink reception being performed using the second indication information, a second transmission timing of the second uplink transmission is based on a second TA value associated with a second TAG corresponding to the second indication information among the plurality of TAGs.

13. A base station performing uplink reception in a wireless communication system, the base station comprising:

at least one transceiver; and
at least one processor coupled to the at least one transceiver,
wherein the at least one processor is configured to:

transmit, through the at least one transceiver, configuration information related to a serving cell to a user equipment (UE), wherein the configuration information including information about a plurality of timing advance groups (TAGs) associated with the serving cell;
transmit, to the UE through the at least one transceiver, downlink control information (DCI) including first indication information and second indication information; and
perform at least one of first uplink reception or second uplink reception based on at least one of the first indication information or the second indication information,
wherein based on the first uplink reception being performed using the first indication information, a first transmission timing of the first uplink transmission is based on a first TA value associated with a first TAG corresponding to the first indication information among the plurality of TAGs, and
wherein based on the second uplink reception being performed using the second indication information, a second transmission timing of the second uplink transmission is based on a second TA value associated with a second TAG corresponding to the second indication information among the plurality of TAGs.

14. A processing device configured to control a user equipment (UE) to perform uplink transmission in a wireless communication system, the processing device comprising:

at least one processor; and
at least one computer memory operatively coupled to the at least one processor and storing instructions for performing operations upon being executed by the at least one processor,
wherein the operations comprise:

receiving configuration information related to a serving cell from a base station, wherein the configuration information including information about a plurality of timing advance groups (TAGs) associated with the serving cell;
receiving, from the base station, downlink control information (DCI) including first indication information and second indication information; and
performing at least one of first uplink transmission or second uplink transmission based on at least one of the first indication information or the second indication information,
wherein based on the first uplink transmission being performed using the first indication information, a first transmission timing of the first uplink transmission is based on a first TA value associated with a first TAG corresponding to the first indication information among the plurality of TAGs, and
wherein based on the second uplink transmission being performed using the second indication information, a second transmission timing of the second uplink transmission is based on a second TA value associated with a second TAG corresponding to the second indication information among the plurality of TAGs.

15. At least one non-transitory computer readable medium storing at least one instruction, wherein:
the at least one instruction executed by at least one processor controls a device which performs uplink transmission or downlink reception in a wireless communication system to perform:

receiving configuration information related to a serving cell from a base station, wherein the configuration information including information about a plurality of timing advance groups (TAGs) associated with the serving cell;
receiving, from the base station, downlink control information (DCI) including first indication information and second indication information; and
performing at least one of first uplink transmission or second uplink transmission based on at least one of the first indication information or the second indication information,
wherein based on the first uplink transmission being performed using the first indication information, a first transmission timing of the first uplink transmission is based on a first TA value associated with a first TAG corresponding to the first indication information among the plurality of TAGs, and
wherein based on the second uplink transmission being performed using the second indication information, a second transmission timing of the second uplink transmission is based on a second TA value associated with a second TAG corresponding to the second indication information among the plurality of TAGs.

## FIG.1

NGC

AMF/UPF      AMF/UPF

NG-C/U      NG-C/U

NG-C/U      NG-C/U

Xn

gNB      gNB

Xn      Xn

gNB

NG-RAN

## FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbols

**FIG.3**

**FIG.4**

FIG.5

**FIG.6**

| INITIAL CELL SEARCH | SYSTEM INFORMATION RECEPTION | RANDOM ACCESS PROCEDURE | | | | GENERAL DL/UL Tx/Rx | |

PSS/SSS& [DLRS]& PBCH — S601

PDCCH/ PDSCH (BCCH) — S602

PRACH — S603 · PDCCH/PDSCH — S604 · PUSCH — S605 · PDCCH/PDSCH — S606

PDCCH/PDSCH — S607 · PUSCH/PUCCH — S608

· DL/UL ACK/NACK
· UE CQI/PMI RI REPORT
  USING PUSCH AND PUCCH

EP 4 472 301 A1

**FIG.7**

| Downlink frame i |
|---|

| Uplink frame i |
|---|

$(N_{TA} + N_{TA,offset})T_C$

**FIG.8**

| R | Timing advance command | | Oct 1 |
|---|---|---|---|
| Timing advance command | | UL grant | Oct 2 |
| UL grant | | | Oct 3 |
| UL grant | | | Oct 4 |
| UL grant | | | Oct 5 |
| Temporary C-RNTI | | | Oct 6 |
| Temporary C-RNTI | | | Oct 7 |

**FIG.9**

| TAG ID | Timing advance command | Oct 1 |
|---|---|---|

**FIG.10**

| RECEIVING CONFIGURATION INFORMATION RELATED TO THE SERVING CELL FROM THE BASE STATION | ⌇S1010 |

| RECEIVING DCI INCLUDING FIRST INDICATION INFORMATION AND SECOND INDICATION INFORMATION FROM THE BASE STATION | ⌇S1020 |

| PERFORMING AT LEAST ONE OF FIRST UPLINK TRANSMISSION OR SECOND UPLINK TRANSMISSION BASED ON AT LEAST ONE OF THE FIRST INDICATION INFORMATION OR THE SECOND INDICATION INFORMATION | ⌇S1030 |

**FIG.11**

| TRANSMITTING CONFIGURATION INFORMATION RELATED TO THE SERVING CELL TO THE UE | ⌇S1110 |

| TRANSMITTING DCI INCLUDING FIRST INDICATION INFORMATION AND SECOND INDICATION INFORMATION TO THE UE | ⌇S1120 |

| PERFORMING AT LEAST ONE OF FIRST UPLINK RECEPTION OR SECOND UPLINK RECEPTION BASED ON AT LEAST ONE OF THE FIRST INDICATION INFORMATION OR THE SECOND INDICATION INFORMATION | ⌇S1030 |

**FIG.12**

(a)

| TAG ID | TASG ID | Enhanced TA command |
|---|---|---|

(b)

| TAG ID | | Timing Advance Command |
|---|---|---|
| C | TASG ID | Enhanced TA command |

(c)

| TAG ID | | Timing Advance Command |
|---|---|---|
| R | C | Enhanced TA command |

(d)

| TASG ID | Enhanced TA Command |
|---|---|

**FIG.13**

DCI → DL frame

PUSCH → UL frame

$N_{TA,0}$ or $N_{TA,0}$

CORESETpool index 0 → TAG ID 0
CORESETpool index 1 → TSG ID 1

EP 4 472 301 A1

# FIG.14

**Cell group #0**

**TAG Id 0**

Cell #0
    BWP#0

Cell #1    The_largest SCS
    (BWP#0)    BWP#1

**TAG Id 1**

Cell #2    The_largest SCS
    (BWP#0)    BWP#1

Cell #3
    BWP#0    BWP#1

Cell #4
    BWP#0    BWP#1

(a)

**Cell group #0**

**TAG Id 0**

Cell #0    The_largest SCS for TRP#1
    (BWP#0)
    TRP#0 TRP#1

Cell #1    The_largest SCS for TRP#0
    (BWP#0)    BWP#1
    TRP#0    TRP#0 TRP#1

**TAG Id 1**

Cell #2    The_largest SCS for TRP#0
    (BWP#0)    BWP#1
    TRP#0    TRP#0

Cell #3        The_largest SCS for TRP#1
    BWP#0    (BWP#1)
    TRP#0 TRP#1    TRP#0 TRP#1

Cell #4
    BWP#0    BWP#1
    TRP#0 TRP#1    TRP#0 TRP#1

(b)

**FIG.15**

UE                                                                Base station

Configuration information
related to a serving cell                                      S1201

Control information including
a timing advance command                                   S1202

Uplink transmission                                            S1203

**FIG.16**

108    208

100

First Device

102 — Processor(s)    Transceiver(s)

104 — Memory(s)

106

200

Second Device

Transceiver(s)    Processor(s) — 202

Memory(s) — 204

206

## INTERNATIONAL SEARCH REPORT

| | International application No. |
|---|---|
| | **PCT/KR2023/000997** |

**A. CLASSIFICATION OF SUBJECT MATTER**

**H04W 56/00**(2009.01)i; **H04W 72/23**(2023.01)i; **H04B 7/024**(2017.01)i

According to International Patent Classification (IPC) or to both national classification and IPC

**B. FIELDS SEARCHED**

Minimum documentation searched (classification system followed by classification symbols)

H04W 56/00(2009.01); H04W 52/14(2009.01); H04W 52/30(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 타이밍 어드밴스 그룹(TAG), 지시 정보(indication), 상향링크(uplink), 전송 타이밍(transmission timing), 타이밍 어드밴스(TA)

**C. DOCUMENTS CONSIDERED TO BE RELEVANT**

| Category* | Citation of document, with indication, where appropriate, of the relevant passages | Relevant to claim No. |
|---|---|---|
| DX<br>DA | 3GPP; TSG RAN; NR; Physical layer procedures for control (Release 15). 3GPP TS 38.213 V15.14.0. 30 June 2021.<br>See pages 10-11. | 1,4-5,9-15<br>2-3,6-8 |
| A | KR 10-2014-0140548 A (LG ELECTRONICS INC.) 09 December 2014 (2014-12-09)<br>See claims 1-7. | 1-15 |
| A | KR 10-1752822 B1 (HUAWEI TECHNOLOGIES CO., LTD.) 30 June 2017 (2017-06-30)<br>See paragraphs [0247]-[0259]; and figure 1. | 1-15 |
| A | KR 10-2021-0003304 A (SAMSUNG ELECTRONICS CO., LTD.) 11 January 2021 (2021-01-11)<br>See paragraphs [0029]-[0068]; and figure 4. | 1-15 |
| A | KR 10-2015-0058501 A (BLACKBERRY LIMITED) 28 May 2015 (2015-05-28)<br>See paragraphs [0083]-[0084]; and figure 10. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 April 2023** | **12 April 2023** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/000997**

| Patent document cited in search report | | | Publication date (day/month/year) | Patent family member(s) | | | Publication date (day/month/year) |
|---|---|---|---|---|---|---|---|
| KR | 10-2014-0140548 | A | 09 December 2014 | US | 2015-0031410 | A1 | 29 January 2015 |
| | | | | US | 9282521 | B2 | 08 March 2016 |
| | | | | WO | 2013-141647 | A1 | 26 September 2013 |
| KR | 10-1752822 | B1 | 30 June 2017 | AU | 2013-397749 | A1 | 07 January 2016 |
| | | | | BR | 112015031463 | A2 | 25 July 2017 |
| | | | | CN | 105247933 | A | 13 January 2016 |
| | | | | CN | 105247933 | B | 21 June 2019 |
| | | | | EP | 2996417 | A1 | 16 March 2016 |
| | | | | EP | 2996417 | B1 | 11 October 2017 |
| | | | | MX | 2016000966 | A | 09 May 2016 |
| | | | | RU | 2016101701 | A | 15 September 2017 |
| | | | | US | 2016-0088577 | A1 | 24 March 2016 |
| | | | | US | 9832744 | B2 | 28 November 2017 |
| | | | | WO | 2015-018095 | A1 | 12 February 2015 |
| | | | | ZA | 201508861 | B | 27 September 2017 |
| KR | 10-2021-0003304 | A | 11 January 2021 | CN | 104348603 | A | 11 February 2015 |
| | | | | CN | 104348603 | B | 12 June 2020 |
| | | | | CN | 111614453 | A | 01 September 2020 |
| | | | | EP | 3028391 | A1 | 08 June 2016 |
| | | | | EP | 3028391 | B1 | 15 April 2020 |
| | | | | EP | 3696995 | A1 | 19 August 2020 |
| | | | | KR | 10-2016-0038033 | A | 06 April 2016 |
| | | | | KR | 10-2198642 | B1 | 07 January 2021 |
| | | | | US | 10057919 | B2 | 21 August 2018 |
| | | | | US | 10397945 | B2 | 27 August 2019 |
| | | | | US | 10728923 | B2 | 28 July 2020 |
| | | | | US | 11324031 | B2 | 03 May 2022 |
| | | | | US | 2016-0192389 | A1 | 30 June 2016 |
| | | | | US | 2018-0317252 | A1 | 01 November 2018 |
| | | | | US | 2019-0342908 | A1 | 07 November 2019 |
| | | | | US | 2020-0359406 | A1 | 12 November 2020 |
| | | | | WO | 2015-016609 | A1 | 05 February 2015 |
| KR | 10-2015-0058501 | A | 28 May 2015 | CN | 104662971 | A | 27 May 2015 |
| | | | | CN | 104662971 | B | 20 April 2016 |
| | | | | EP | 2901776 | A1 | 05 August 2015 |
| | | | | EP | 2901776 | B1 | 23 May 2018 |
| | | | | EP | 3343986 | A1 | 04 July 2018 |
| | | | | EP | 3343986 | B1 | 07 August 2019 |
| | | | | EP | 3562225 | A1 | 30 October 2019 |
| | | | | EP | 3562225 | B1 | 16 December 2020 |
| | | | | EP | 3846553 | A1 | 07 July 2021 |
| | | | | ES | 2685966 | T3 | 15 October 2018 |
| | | | | ES | 2753858 | T3 | 14 April 2020 |
| | | | | HK | 1210651 | A1 | 29 April 2016 |
| | | | | HU | E045861 | T2 | 28 January 2020 |
| | | | | HU | E053562 | T2 | 28 July 2021 |
| | | | | TW | 201419907 | A | 16 May 2014 |
| | | | | TW | I594650 | B | 01 August 2017 |
| | | | | US | 2014-0086161 | A1 | 27 March 2014 |
| | | | | US | 8976780 | B2 | 10 March 2015 |

Form PCT/ISA/210 (patent family annex) (July 2022)

**INTERNATIONAL SEARCH REPORT**
Information on patent family members

International application No.

**PCT/KR2023/000997**

| Patent document cited in search report | Publication date (day/month/year) | Patent family member(s) | Publication date (day/month/year) |
|---|---|---|---|
| | | WO 2014-051713 A1 | 03 April 2014 |

Form PCT/ISA/210 (patent family annex) (July 2022)